# EUROPEAN PATENT APPLICATION

(11) **EP 1 241 595 A2**
(43) Date of publication of application: **18.09.2002**
(21) Application number: 02075988.2
(22) Date of filing: 13.03.2002
(51) Int. Cl.: G06F 17/30, G06F 3/033

(54) **System for the creation, visualisation and management of three-dimensional objects on web pages and a relative method**

(30) Priority: 14.03.2001 IT MI010538
(71) Applicant: Phoenix Tools S.r.l., 20124 Milan (IT)
(72) Inventor: Bazzoni, Giovanni, 20124 Milan (IT); Riccardi, Karim, 20124 Milan (IT); Rinaldi, Gerardo, 20124 Milan (IT); Savare' Riccardo, 20124 Milan (IT)
(74) Representative: Coppo, Alessandro

(57) **Abstract**

A system for the creation, visualisation and management of three-dimensional objects on web pages, suitable for allowing access to three-dimensional objects present on a web browser of the World-Wide-Web, which are treated in such a way as to appear to be real objects animated on standard web pages, whilst the user can freely move, rotate and generally interact with the aforementioned objects to best visualise the information present on the outer surfaces. The main characteristic of the present invention lies in the fact that html pages can superimpose over the entire surface of the object, so that each face of such object behaves like a web browser of the standard type, supporting its typical functions.

## Description

The present invention generically refers to the possibility of executing interaction, by users of the World-Wide-Web and, more precisely, describes an electronic apparatus and a relative method, which allow, on the one hand, the creator of web sites to use three-dimensional objects as information visualisation elements and, on the other hand, the user of such sites to interact with further contents and applications which can be visualised in a web browser, by means of three-dimensional interfaces.

In particular, the invention describes a method for the creation of three-dimensional objects with html pages visualised on their outer surfaces, for determining the degree of interaction with the user and to define replies to the commands inputted by the user; the invention moreover describes a visualisation system of three-dimensional objects inside a standard web browser and a method of interaction with the user.

Initially, the World-Wide-Web had not raised much interest in the NSFNet community (the new name given to the newly created network after the absorption of the internet's first incarnation, ARPANet, by the National Science Foundation); one reason was that there were few websites and it was necessary to create hyperlinks between the various sites so that they could be connected instantaneously.

The creation of hyperlinks was obtained by inserting means for accessing the remote pages inside the text of a page, using HTML language ("Hypertext Markup Language"), which constitutes the source code for the Web; all the user had to do was click on the links to be connected through the network of the site indicated. Html language allowed users to execute connections between internet sites without knowing how to find them; moreover, users did not have to know html language, because the web browser (software programmes which read the html source code and convert it into a readable text) took care of all this.

Nevertheless, to begin with, web sites were only text-based, like the first browsers, and, therefore, were neither graphical nor exciting.

In 1993 the first free and easy-to-use graphical browser (Mosaic) was invented and this enormously accelerated the traffic on the web and Mosaic became the most widely used network application.

With Mosaic and a faster network graphics became a reality for anybody who had internet access.

At the same time, computer graphics made giant steps with the introduction of standard image file formats which optimised data compression to slimline the load onto a quite small band (JPEG).

In 1994 the creation of VRML language definitively introduced the concept of three-dimensional structures on the internet, theorising the possibility of exploring virtual worlds online.

Another big event, in 1995, was the conversion of the net by NSFNet into commercial structures; from this moment, commercial companies of the whole world began populating the net with their own web sites to offer products and services, and enormous amounts of money were invested in the Internet.

This gave a big impulse to all software companies which put their minds to developing web applications, not least of which those specialised in three-dimensional graphics.

After the partial failure of VRML, instead of creating three-dimensional worlds separated from the rest of the internet, the direction taken was that of generating objects and environments which could be seen and manipulated inside a standard browser.

This second revision of the VRML concept led software companies to propose solutions orientated towards electronic commerce and, that is, to present, inside web browsers, articles visualised through realistic photos or cartoon images in a three-dimensional space; we refer to such solutions with the name "3D Player". "3D Players" of the web operate like operating engines for video games; they visualise scenes or three-dimensional objects by video, they put them into real time and they manage the interactivity with the user.

Usually, the elements are on the server of a three-dimensional web company and are visualised through plug-ins for the browser which must be downloaded and installed.

One of the biggest problems in this field is the internet band width which imposes a relative simplicity of the three-dimensional elements; regarding which, all 3D Player producers have come up with more or less effective solutions to tackle the problem, so as to transfer the least possible data to the 3D Player, however the techniques generally used are incremental compression and transfer of only the data which the user is accessing.

Also from the point of view of the generation and publication process of a website technology has made giant steps forward.

The spread of multimedia companies which take care of providing key-in-hand solutions for the web to companies, has moved forward at the same pace as the proliferation of evolved instruments for the generation of html pages; such instruments, as well as easing the insertion of text and graphical information into a web page, allow the introduction and management of interaction functions with the user and, moreover, through "authoring" software, it is possible to produce entire websites without writing a single line of html code, because it is the application itself which at the time of publication takes care of generating the html code necessary for reproducing effects and information on a normal web browser, in such a way as to allow the author to concentrate upon the creative, architectural and functional aspect of a web application.

Although it is now possible to produce an internet page rich in text, graphics and animation, the typically two-dimensional support offered by a traditional web browser nevertheless remains an insurmountable limit; indeed, if the information to be inserted into a site are a lot, the author is forced to distribute the contents over many pages obliging the web user to follow the links which take him to one page after another.

The alternative of forcing all of the contents into a single big page is generally used very little for obvious aesthetical reasons and often for distribution requirements of the information in logic sections.

The purpose of the present invention is, therefore, that of avoiding the drawbacks outlined previously and, in particular, that of realising a system for the creation, visualisation and management of three-dimensional objects on web pages and a relative method, which allow the available space of a web page to be expanded indefinitely to store information benefiting the aesthetical and technical-architectural characteristics of the website.

Such a purpose is achieved by a method for the creation, visualisation and management of three-dimensional objects on web pages, according to claim 1, and by a system implementing such method, according to claim 2, to which we refer for the sake of brevity.

Advantageously, the entire system object of the invention foresees two actors and two different hardware configurations: the author of the web page and the user of the web browser.

A first system comprises a web server in which are stored the web pages containing the three-dimensional objects and the access keys, a computer for generating the web pages and a software program, whereas a second system foresees the web browser being executed on one or more processors, a software application (the 3D Player active component) operating in the web browser and the web server, suitable for executing the web application.

When the user accesses the web server to download the contents of the web, he uses a traditional web browser. The 3D Player active component, if already present in the web browser inside the user's processor, allows the interpretation and visualisation of a reference file containing the description of the three-dimensional objects.

Alternatively, such a component can be downloaded automatically from the server and installed in the user's processor. Thanks to the active component, the interaction between the user and the three-dimensional objects generated is executed locally on the user's computer which guarantees high performance and a minimisation of the network load.

This type of architecture thus allows numerous web browsers to access the web application simultaneously.

In practice, according to the present invention, it is foreseen to provide a system and a method for improving the visual solutions of a web server application and to allow access to it from a web browser of the World-Wide-Web, by means of an effective user interface.

The presence of three-dimensional interfaces inside a normal web browser, just as described in the present invention, can be managed in a static or dynamic mode.

Whether it is static or dynamic has got nothing to do with the animated properties of the three-dimensional component or with the interaction capability by the user; it rather refers to the ability of the component to self-generate and configure itself to requirements and to the user's preferences.

In the last two years the world has witnessed an evolution in web site architecture and functions; the most complex sites are often supported by databases interfacing with the web server which, for example, retain the identifying information of the users which can access it and personalise their navigation.

Another typical case of a dynamic site are the widespread search engines which provide an interactive service for specifying internet addresses which correspond with search keywords inputted by the user.

In all of these cases the html page visualised in the web browser is not statically generated by the author of the site but is dynamically composed by the server system according to the case; all web servers are capable of executing special applications also known as scripts (asp, jsp, php, etc.); they are specifically developed by the web programmer to access databases, to make the necessary queries and to generate the appropriate html pages based upon the replies.

The same paradigm is applied for the generation and use of three-dimensional components described in the present description.

The three-dimensional object visualised in the web page can be created statically and animated by the author of the site and can appear in the same way to all of the users which access that specific page; alternatively, the three-dimensional object and the web pages to be mapped out on its surface are generated in a dynamic mode by the server program any time a web page with such a capacity is accessed.

For the first case a specific application has been designed which helps the author define the geometric and animation characteristics of the object which he wants to represent in three-dimensions in a certain page of his site and such an application is defined as an author system.

For the second case it is entrusted to the ability of the programmer of the site to implement the services he believes necessary in a server script.

It is the task of the server which interprets the script to generate in output a text file which describes the three-dimensional object in a format which can be interpreted by 3D Player executed on the user's machine.

In both cases the author of the site must take care of inserting, into the html code of the page he wishes to host, a three-dimensional component, specific instructions for invoking 3D Player and to obtain the necessary information on the characteristics of the specific component.

In the case of a static mode, such information consists of a binary file generated automatically by the author system; in the case of a dynamic mode, on the other hand, of a descriptive file of the component it is necessary to state the server application to execute, so that it is said application which restores the description text into text format.

The author of the website has, in view of the above, two modes for generating and describing the properties of the three-dimensional components which he wishes to insert into his pages: in the first he relies upon the author system, in other words a software application capable of being executed by a normal computer, which provides a user-friendly graphical interface to create the object in an interactive manner and to visualise its contents as a preview. Inside the application, the author defines the geometry of the object and the addresses of the html pages which he wishes to visualise on each face of the object; for each polygon which constitutes the surface of the object, as an alternative to the html page, it can define a background colour.

Once the geometry and the mapping of the object is defined, the subsequent step consists of describing its animation and its degrees of freedom; the author decides, that is, if, once visualised on the web page, the object will have to translate and rotate inside of it according to a plan defined by the author and if the user shall be able to intervene transporting, rotating or distancing and approaching the object with the mouse as he pleases.

For the animation of the object the system makes use of function curves, according to which a curve is associated with every animatable property of the object, expressing the value of the property at every moment in time; an "editor" program of the function curves allows the author to define in graphics the shape of every function curve in time.

Other properties of the objects which can be selected by the author are described in detail hereafter.

At the conclusion of the object definition process, the author system generates the output necessary for publishing the work executed on the predetermined web server. The output consists of a binary file containing the description of the object, and of a few lines of html code to insert in the html code of the web page which must receive the three-dimensional element. The task of these lines is to call up in the user's computer the active component consisting of the 3D Player and to pass to it the description of the object to be visualised.

As stated above, as an alternative to the author system, the programmer of the site can implement server applications the execution of which has a result of a description file of the three-dimensional object.

For such a purpose, a file owner format has been defined which defines the necessary rules so that the description can be interpreted by the 3D Player; said 3D Player is, indeed, capable of interpreting indifferently both binary files and text, so long as they respect the described format.

The 3D Player is situated at the end of the chain: it is executed on the internet user's computer when he accesses a web page which contains inside of it a link to 3D Player.

If the 3D Player is not present in the user's computer or it is not updated, the user is invited to download it from the net; downloading and installation of 3D Player takes place automatically and is transparent to the user himself.

At the time of installation, the 3D Player receives a file descriptor (binary or ASCII) containing the definition of the three-dimensional objects to be visualised; the fundamental operations executed by the 3D Player are the creation in memory of a web browser for every face of the object with which the web page address is associated, the loading of such pages in web browsers in memory and the transformation of the page in an image file, as well as a rendering procedure of the object in text format with the web pages mapped on its faces.

The 3D Player also takes care of managing the interaction with the user who, within the possible restrictions in movement imposed by the author, is capable of manipulating the object in the space of the active component which contains it.

The active component is a Windows application which is executed by the host web browser.

The visualisation window of the active component, the size of which is defined by the author, overlies the underlying web page; of course, it is the task of the rendering process to render all of the area occupied by the active component transparent, where the object to be represented is not present, so as not to obscure the underlying page.

The 3D Player, as well as allowing the user the capacity to manipulate the position and orientation of the object in the space, guarantees all of the usual operations which the user is used to executing on an interface based upon Hypertext.

As stated, upon each face of the three-dimensional object it is possible to map out entire html pages, conserving all of their special characteristics of interaction with the user; such web pages represented in perspective on the surface of the object are in all senses clones of the host web browser and replicate its functions.

Further purposes and advantages of the present invention shall become clearer from the following description, which refers to a preferred but not limiting example of application of the invention and from the attached drawings, in which:
- figure 1 represents a flow diagram of the downloading step of the 3D Player and of the authentication mechanism;
- figures 2a and 2b describe the files in text format suitable for defining a three-dimensional component which can be recognised by an electronic processing unit according to the present invention;
- figure 3 shows some rules in text format which can be used for the purposes defined in the previous figures;
- figure 4 shows an example of how to describe a simple three-dimensional component in text format, according to the present invention;
- figure 5 is a block diagram of the main relationships and of the main components of a procedure for the creation and the visualisation of three-dimensional objects on a web page, according to the present invention;
- figure 6 shows an example of html code generated by the authoring system;
- figures 7a and 7b show two flow diagrams relative to a static use of the system, according to the present invention;
- figures 8a and 8b show two flow diagrams relative to a dynamic use of the system, according to the present invention;
- figure 9 is a detailed flow diagram of the 3D Player, according to the invention;
- figure 10 is a detailed flow diagram of the rendering process, according to the invention;
- figure 11 is a detailed flow diagram of the authoring system, according to the invention.

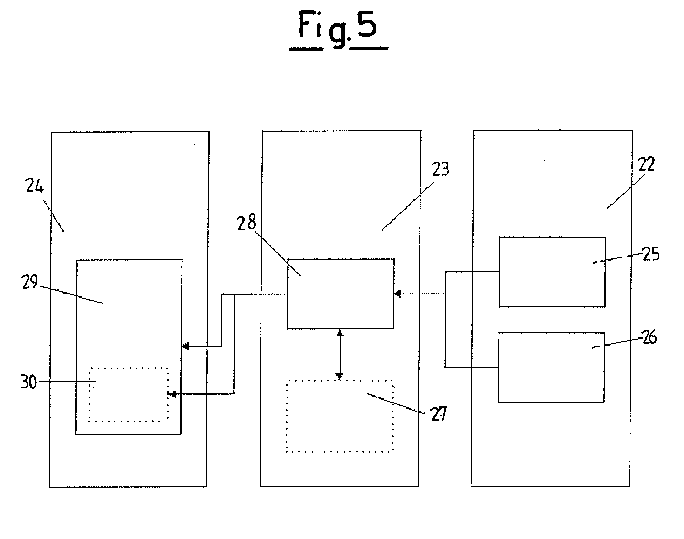

With particular reference to figure 5, which represents the overall plan of the hardware and software system constituting the object of the present invention, a server side 22 and a user side 24 of the application are distinguished.

From the server side 22 the author of the website is equipped with a computer 22A, suitable for executing a software application 25, which constitutes the author system of the process.

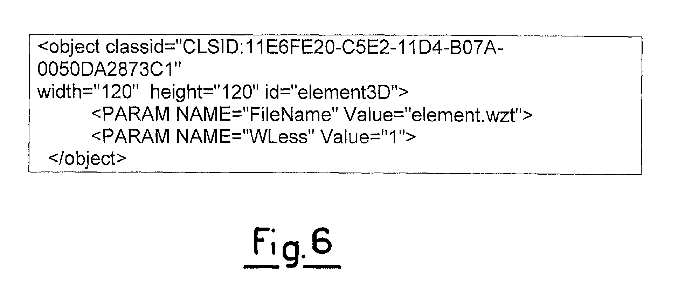

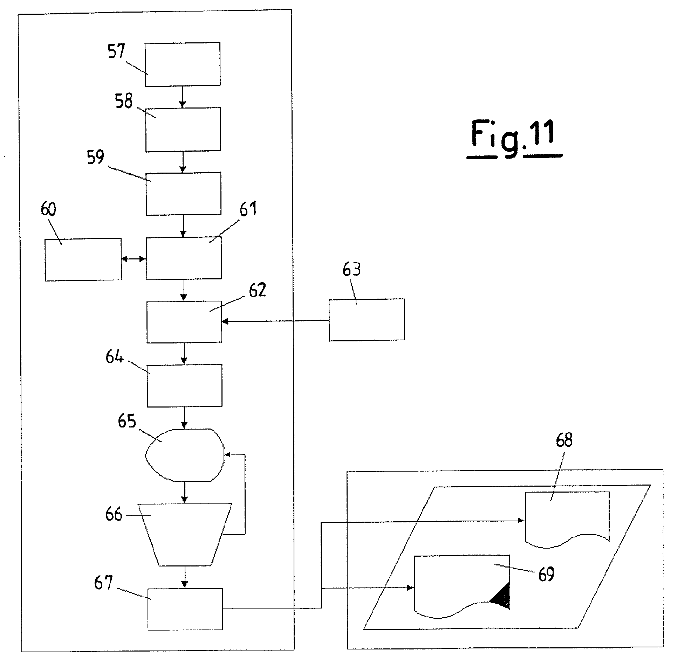

It is software equipped with a user-friendly graphical interface, which helps the author in the process of creation and definition of the properties and of the three-dimensional components which he wishes to visualise in a web page of the site; in figure 11 the mechanisms and the distinguishing aspects of the author system shall be shown in greater depth. The author system generates two fundamental results, consisting of a descriptor file of the objects created and of a series of html instructions, shown in figure 6, to be inserted in the html page hosting the three-dimensional component.

As an alternative to the author software 25, the system, according to the invention defines a text file format with which to describe the three-dimensional components and their properties: being that it is uncoded data, such a file can be made out manually by the author without using any support software (author system 31).

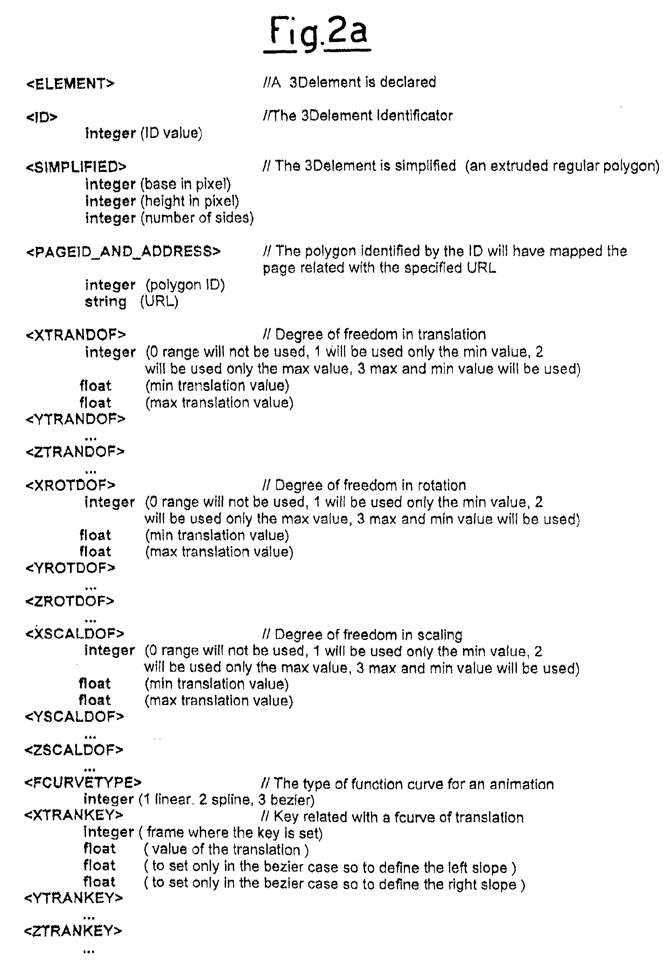

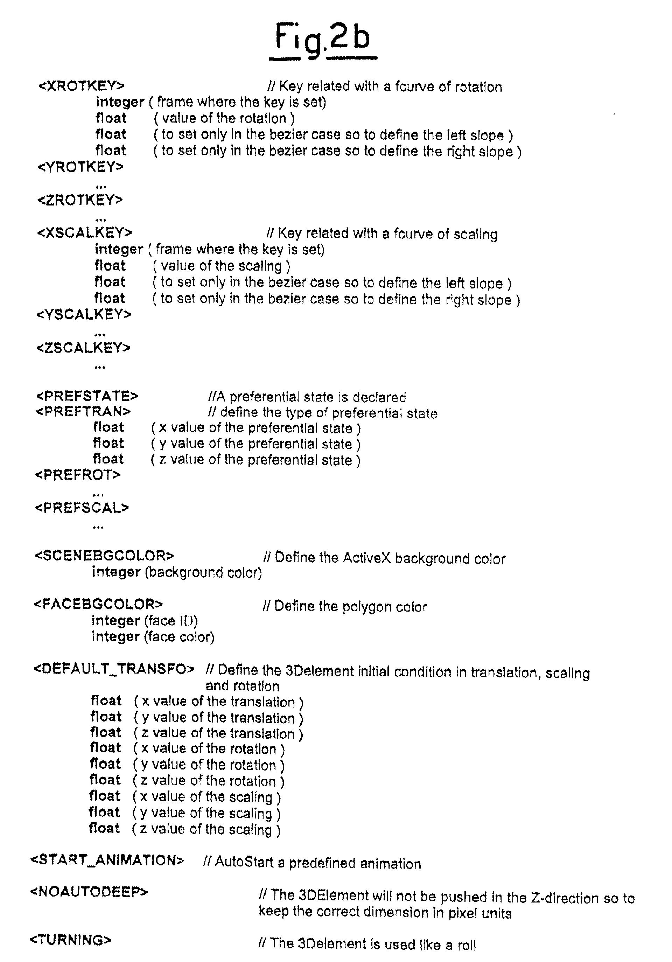

Of course, such an operation is not executed by hand but programmatically and in a dynamic manner, according to which the programmer of the site implements specific server scripts, by means of any text editor 26, which when executed produce in output a text file in the required format (regarding which, see figures 2a and 2b).

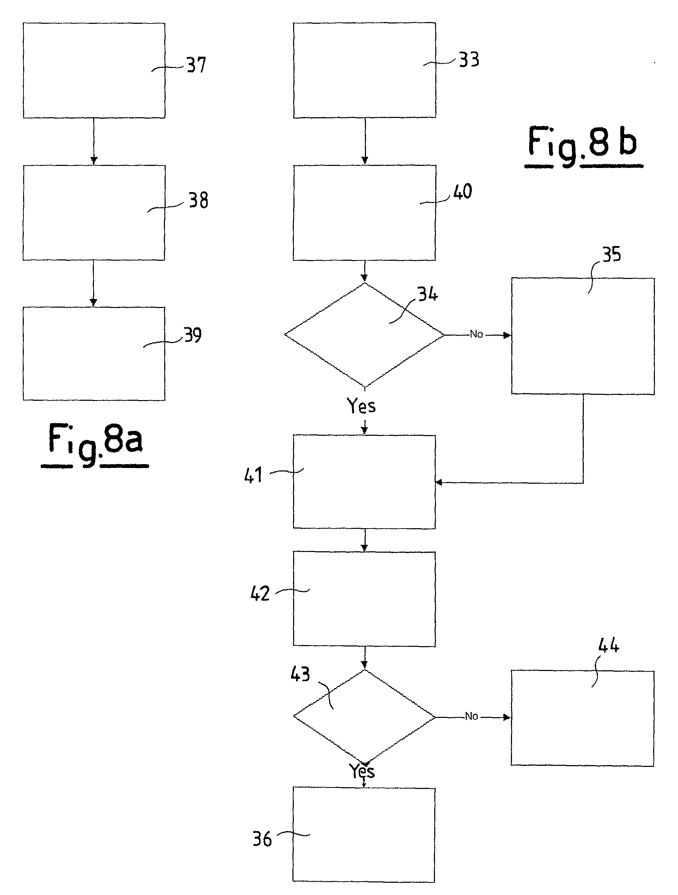

As fully described further on regarding figure 8, such a mode, which is referred to with the definition of dynamic approach, as opposed to the static approach based upon the use of the author system, is particularly powerful and flexible: it offers the programmer the possibility of using the technology proposed as a natural output interface for web applications and services which for example are supported by a database 27.

The html page containing the connection to the three-dimensional component, the file which describes it and/or the definition of the server scripts to be executed for the generation on line of the three-dimensional object, are published on the web server 23, waiting to be downloaded by any user computer 24, which is connected to the net through the web browser 29.

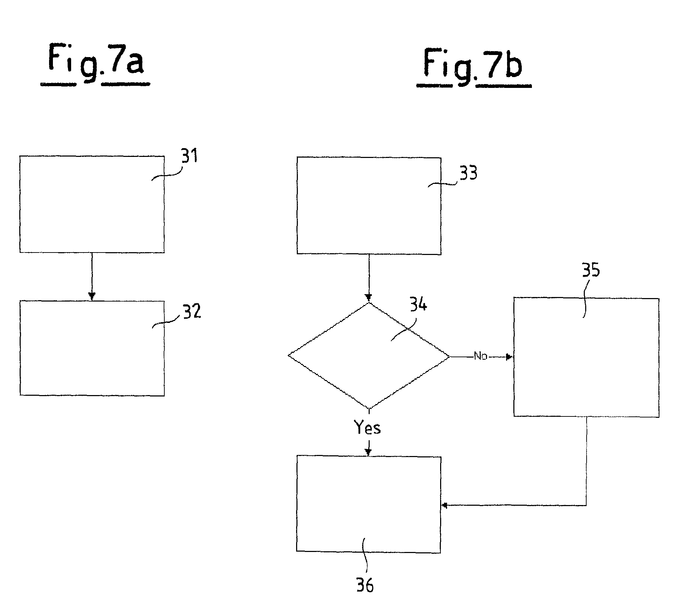

When the web server is accessed the 3D Player, if not already present on the user computer 24, is downloaded and executed, and the file containing the three-dimensional object to be visualised is presented to it in input (steps 42-45 of figure 7B).

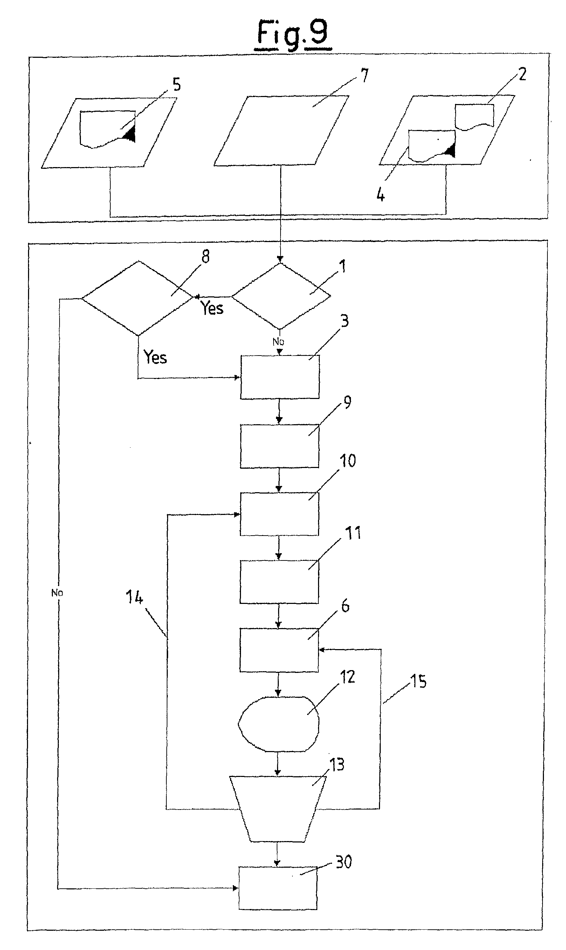

The 3D Player component 30, as we shall see in detail hereafter regarding figure 9, is executed locally on the user computer 24 and in turn will create in memory other clones of the host web browser 29, to project on the faces of the three-dimensional object.

Figure 9 illustrates the processes executed by the component 30 on the user computer 24; in particular, it describes the visualisation method of the three-dimensional elements on a web browser, according to the present invention.

Firstly, in step 1 the format of the data in input is recognised; in the case in which we are dealing with a text format, the block 8 executes a validation step, using a licence authentication file and essentially verifying that the access key coming from the server 22 in the document 2 is the one relative to the name of the domain server 7.

After the validation step, the block 3 executes a reading of the description of the elements of the documents 4 or 5 and creates the three-dimensional object in memory, ready to be sent to the rendering process block 6.

The description of the element contains information relative to the geometry and the animation of the component and the URL addresses of every html element present on the surfaces of the object; the details of the data transmitted to the components 30 shall become clearer from that which is shown in figure 2.

The main data which is read during the step indicated with 3 in figure 9 consists of the number of sides of the base of the three-dimensional object, the length of each side, the dimensions of the side faces of the object, the animations and possible preferential states of rest and the degrees of freedom granted to the user.

The block 9 is capable of realising a new web browser 29 for each face of the three-dimensional object associated with a valid URL (in other words, the address of a html file or of a whatever server application which restores a file which can be visualised on the browser). Some of the faces which compose the three-dimensional object can also not have any URL address association but only a background colour. The web browsers 29 are created directly in the memory of the computer, in other words they are not directly visualised on the three-dimensional object, and the type of browser corresponds to the same browser application which hosts the three-dimensional component; for example, in the case of a prototype implemented in the "Internet Explorer" environment, the predetermined web browser 29 can be a "WebBrowser" based upon Microsoft's COM technology.

In this step, moreover, the storing block 9 further records the relationships existing between each face of the object and its relative web browser 29.

After the installation of the browsers, the block 10 loads in every web browser 29 the URL address associated with every face of the three-dimensional object; whilst the page is loaded, at predefined moments, the block 10 invokes the subsequent texturing 11 and rendering 6 procedures, so as to execute a new and correct viewing of the three-dimensional object on the monitor 12, in an incremental manner as the page is downloaded from the net.

When all of the local browsers determine that the loading of the html page has ended, the rendering procedure 6 is stopped and a rests listening step is begun for the subsequent event 13 started off by the used.

In the texturing step 11, the image of the html page visualised in the web browser 29 is memorised; such a step 11 represents one of the more important characteristics of the present invention.

A physical image of the web page is then derived and captured by the web browser 29 at a certain moment in time, as if a photograph were being taken of the current state of the information visualised in the browser. Such an image, therefore, is sent to the rendering block 6 together with the geometric description of the three-dimensional object.

During the step of capturing the image, such a procedure allows communication with operating web browsers present in memory, so as to obtain the active link positions inside the html page.

The UV coordinates, in the reference system of the html image, and the positions of the rectangular areas containing the active links are stored in the procedure for processing the interactions of the user 13 once the html page has been translated into images on each face of the three-dimensional object.

The images to be visualised on each face, realised according to the procedure described previously, together with the geometric description of the object, are sent into the rendering block 6, which is capable of visualising the structure of the object on the monitor 12.

The rendering process is based upon a linear algorithm by linear scanning executed in real time to maximise the visualisation speed on the monitor 12.

The rendering step 6 of the three-dimensional object allows an image to be created of the object frozen in its movement at a particular moment in time; the image used as a structural map of each face of the object corresponds to the bitmap visualised by every local web browser at the same moment in time and, therefore, the visualised object shows on its faces exactly the same image which a user would see with a standard browser which allows access to that web address.

The rendering step receives in input information on the geometry of the three-dimensional object to be visualised, and information on the translations in space of the object and the images to be projected on the object itself; in particular, it receives in input the coordinates of the vertices of each polygon together with the image to be projected upon each of them.

To pinpoint the pixels in which every line of the image in output (the rgb buffer frame) intersects the sides of the polygons of the object and from here to calculate the colour intensity of each pixel of the image, the rendering process 6 is essentially based upon an algorithm with linear scanning of the traditional type.

The rendering step 6 also foresees an operation of simulation of the shadows which the three-dimensional object projects onto the background surface.

According to an exemplifying but not limiting embodiment of the present invention, the background of the screen 12 consists of the html page visualised in the web browser 29 implementing the 3D Player active component 30; the shadow projected partially obscures the text or the images underneath the page.

Such a visualisation is executed by means of a mechanism of the alpha blending type.

Together with the rgb buffer frame, a further buffer is generated, in other words the UV buffer frame; with this process every pixel has associated with it the identifier of the image to which the pixel belongs and the values of the UV polar coordinates associated with that pixel in the reference system of the image.

In such a way, when a pixel is selected by the user by means of the mouse, the UV buffer frame allows the restoration of information regarding the image and its UV polar coordinates in correspondence with the predetermined point.

If the selected points fall within the rectangular area of an active link, as shown in figure 9 (reference 14), the system executes the function of the link and passes to a new html page repeating the steps of the procedure from block 10 onwards.

In step 13 the events of the mouse generated by the user are intercepted. For every click of the left-hand button the position which was taken up by the pointer on the two-dimensional browser is reconstructed and therefore, if the click took place on an active link (reference 14), a navigation event is sent to the relative local browser in memory or to the main browser containing the three-dimensional object.

If, on the other hand, the event corresponds to a step in which the mouse is displaced with the left-hand button pressed (reference 15), the 3D Player 30 makes the object rotate coherently with the degrees of liberty set by the author or, in the case in which the user has pressed the shift or Ctrl button, the three-dimensional object is translated or raised respectively (reference 15 of figure 9).

Any of the events quoted above involve the need to redesign the three-dimensional object on the screen 12; indeed, to each event described corresponds a change in position relative to the three-dimensional object with respect to the background browser which contains it.

The requirement to execute a new visualisation of the video image is represented in figure 9 by the reference 15 which takes the control of the flow back to the rendering step 6.

If, on the other hand, the user presses the right-hand mouse button, the system visualises a contextual menu which proposes, for example, starting up and/or stopping the possibly associated animation, opening a new browser with the same content of the underlying face, going forward or back to a preferential state (see figure 11), taking the object back to its initial state as well as activating a filter to improve the readability of the content.

In general, the text information contents suffer from problems of readability if they are not visualised on a flat surface like on paper.

In the case in question the text contribution can appear in various situations of orientation: on a side face of the object or inclined with respect to the plane of the monitor 12.

Moreover, it is subject to the perspective distortion inherent to simulation of viewing of three-dimensional objects. To allow, also in these extreme conditions, a good visualisation of the message the 3D Player component implements a contrast filter which has the effect of highlighting the details of the page with a positive influence on the readability of the texts.

The operating mechanism of the rendering step 6 deserves particular attention and to be treated individually.

Since the main purpose of the present invention is introducing a new three-dimensional interface concept for internet navigation, it is essential that the proposed solution guarantee a high degree of interactivity with the user 13.

The bottleneck in all real time three-dimensional applications is the rendering step 6.

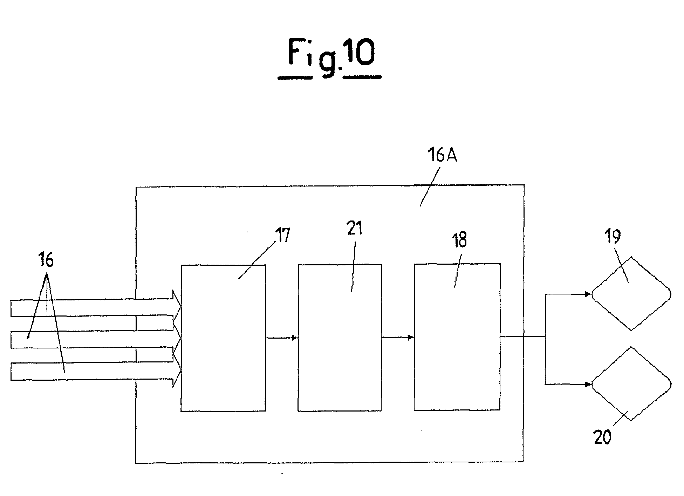

The system object of the present invention has paid particular attention to the optimisation of the performance of a rendering engine. The details of the rendering procedure 6 are fully shown in figure 10.

The flow of information 16 in input of the rendering procedure 16A consists of the geometric data of the three-dimensional object (number and size of the polygons which define its outer surface), of the kinematic data relative to the position of the object (translation, rotation and raising values) in the reference system of the active component 30, of the images extracted from the web browser which must be visualised on the surfaces of the object, or alternatively from the information on the colour with which the object is to be represented.

The first step (reference 17) of the rendering step executes an algorithm with linear scanning; in such a step the geometric and positional information are processed and related from the point of view of the observer to obtain the perspective effect of the three-dimensional object.

The result of the operation consists of the position of the vertices of each face which composes the object, projected on the plane of the image.

In fact the position of the vertices in the three-dimensional space is transformed into two-dimensional coordinates of the image plane so as to allow the subsequent procedure 18 to generate an image (bitmap) of the perspective representation of the object.

As pointed out previously, the perspective viewing of the object is determined by the position in space from the point of view of the observer.

According to the present invention, the virtual observer (or camera) is placed at the centre of the window which contains the three-dimensional object, outside of said window, and looking towards its centre. Such a position is actually the position of the user who observes the computer monitor.

The system described is potentially capable of allowing the movement of the observer, that is, so long as the appropriate interface is provided to the user who observes the object, it is possible to dynamically transport the camera in whatever point of virtual three-dimensional space.

If we imagine complex three-dimensional objects which are concave, with holes and interconnections with other objects and a moving shooting camera, the system can be extended naturally to the navigation of complex and immersive three-dimensional environments.

That is, the user moves inside closed spaces in which the html pages appear projected on the surfaces which he walks through during navigation.

The subsequent procedure 21 of the rendering engine 16A executes the brightness calculations necessary for the representation of the object; one of the fundamental conditions to obtain a realistic simulation of the three-dimensional nature of the object, when it is represented on the two-dimensional support of the plane of the monitor, is that its surface has areas which are lit in a non-homogeneous manner according to the exposure of said areas to virtual light sources present in the scene.

The 3D Player 30 simulates the presence of a light source placed opposite the camera and directed towards the scene and the brightness algorithm takes care of calculating the shadowing of the surface in relation to such a source.

Such a calculation considers the direction of incidence of the light ray with respect to the place on which the point of the surface to be subjected to rendering lies and upon the basis of such an angle varies its intensity.

For obvious reasons of performance only the vertices of each surface are calculated in such a way, whereas the colour value for all of the pixels of the bitmap is calculated by interpolation from the colour information calculated at the vertices.

The block 18 allows the three-dimensional scene to be processed definitively after all of the geometric transformations and brightness calculations have been executed.

Such a block 18 executes the rastering, texturing and blending, written in machine language ("Assembly") and optimised both for MMX (proprietary technology for a Pentium processor) and for 3Dnow (proprietary technology for an AMD processor).

The procedure allows the automatic detection of the type of processor (CPU) installed on the machine and executes the 3D Player 30, and brings about the appropriate optimisation.

In the case of processors without hardware parallelisation technology, normal routines written in standard C language emulate in a purely software manner the same functions other wise implemented in machine language.

The rastering process implemented by the block 18 creates a bitmap 19 in memory of a suitable size, in pixels, to contain the image of the object and with the data structure necessary for storing information on the depth of colour of each pixel (RGBA bitmap).

Subsequently, in the bitmap 19 the polygons are drawn which compose the surface of the object upon the basis of the position of the vertices in output from block 18; for such a purpose only the two-dimensional coordinates of the vertices projected on the image plane are used. At this level, the depth information (coordinate Z) of each vertex is, however, still present to allow the mapping of the images to be calculated.

Drawing a polygon in the bitmap 19 means assigning a colour to each pixel which composes the area of the image corresponding to the polygon; if no structure is assigned to the polygon, a rendering procedure is executed on only the background colour and in this case there is a shadowing effect interpolating the colours of the vertices.

In the contrary case, if an image is associated with the polygon, the pixels of the polygon take on the colour defined by the image downstream of the perspective correction process. This exploits the depth values (coordinate Z) of the vertices to determine the distortion undergone by the image once projected upon the plane of the polygon.

Moreover, since the brightness values for each vertex are calculated in the block 21, the final colour of each pixel is obtained as a result of a blending operation between the colour of the image and the brightness value interpolated from the brightness values of the vertices; in such a way, the image of the polygon appears like a normal html page but correctly shadowed in relation to its position in the space.

A transparency value is associated with the portions of bitmap 19 not containing the three-dimensional object such as not to obscure the parts of page on the background.

The transparent layer is in all respects a further 8 bit image which is composed on the alpha channel of the 32 bit bitmap 19; the shadow of the object is calculated in this step generating a black image of the object, slightly displaced with respect to its true position. Such a black image is represented in the 32-bit bitmap 19 with the alpha channel value suitable for obtaining the correct composition of the shadow on the background image.

The concluding mixing procedure of the 32-bit bitmap (reference 19 of figure 10), previously calculated, with the destination bitmap corresponding to the background html page, is executed by specialised functions. In particular, to execute the alpha blending between two images, they must be described in the same format and, according to the graphics card with which the user's computer is equipped, the background bitmap can be represented with 16, 24 or 32 bit colour depth.

For this reason, for each type of format there is a specific function which, first of all, converts the bitmap in memory into the format of the host bitmap, and which then executes the actual mixing.

All of the format conversion procedures are implemented in machine language so as to best exploit the hardware characteristics of the processor; if a specialised procedure does not correspond to the type of processor an analogous procedure implemented in high level language is implemented.

Besides the bitmap 19 containing the colour and transparency information (RGBA alpha channel) of every pixel, the rendering process generates a second output 20, which guarantees the hypertext functions of the pages visualised on the object.

This is a further bitmap, which is also referred to with the name UV frame buffer, which contains, for every pixel, the identifier of the image to which it belongs and the UV coordinates of the point on the image itself. Such information is used in the block 13 of figure 9, which manages the interactions with the user. When the user, moving with the mouse pointer, selects a pixel of the structure, the UV frame buffer provides the corresponding identifier (ID) of the image and the values of the UV polar coordinates of the point selected.

The 3D Player 30 verifies that such UV coordinate values of the specific image belong to one of the rectangular regions containing an active link of the html page associated with that image and, in such a case, loads the corresponding URL address according to the flow diagram 14 of figure 9. As seen previously, the list of positions of the sensitive rectangular areas for each image is conserved in memory by the block 11 of figure 9.

For reasons of performance, the bitmap 20 is generated by the rendering process only with the object still, whereas when the user is manipulating the object or simply observing its preset animation, such additional information is not produced, since this is not a case in which the user accesses a link whilst this is moving.

In figures 2a and 2b the detailed description of the file format to be used to define a three-dimensional object which can be interpreted by the 3D Player 30 is shown. In particular, the description of the text format and of all of the tags necessary for the definition of every property of the object is shown.

As has been repeatedly stated, the understanding of such a format is essential to the programmer of the site if he intends to generate three-dimensional components in a dynamic manner supported by a server script; moreover, the binary file format produced by the author system, after a visual composition of the element and of its properties, in fact contains the same ciphered information described uncoded in the file in text format.

As can be seen from figures 2a and 2b, the structure of the document is organised with tags, in such a way that each tag describes a property and the field which follows it defines the value of such a property.

In the case in which the data is associated with the tag, it is necessary to define its value and meaning. If it concerns multiple values, they must be separated by a comma.

The first tag is the keyword ELEMENT; such a keyword indicates the starting point of the description of a three-dimensional element. All of the subsequent instructions define properties of that specific element. A further ELEMENT statement marks the end of the description of an object and the start of a subsequent description.

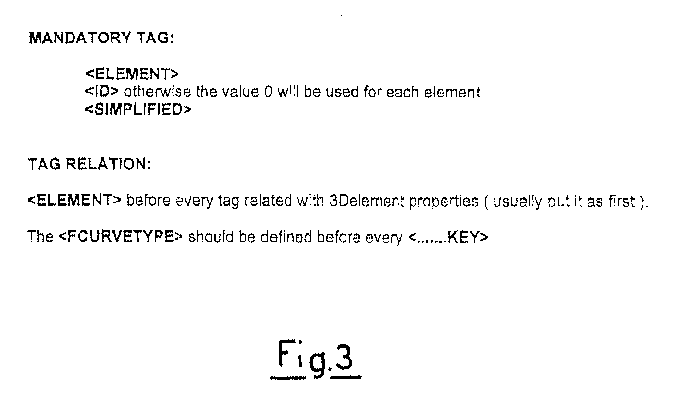

The presence of the ELEMENT statement is compulsory and must be placed at the start of the set of instructions relative to the description of the object, as is clear in the subsequent figure 3, which gathers together some fundamental rules to be respected to generate a file in the correct format.

The subsequent tag to be defined is the identifier of the element in question. If the html page contains multiple presences of three-dimensional elements it is essential that the 3D Player 30 can address each of them. Another statement consists of the tag SIMPLIFIED, which indicates the type of three-dimensional object.

For reasons of simplicity, in the present functional description, the 3D Player 30 is capable of interpreting simple objects, to be precise regular cylinders; in geometry jargon, for regular cylinders we means solid objects having as a directrix a regular polygon and generatrices parallel to the normal to the polygon. The system is, however, capable of managing complex volumes defined by the tag COMPLEX.

As can be seen from figure 2a, for the description of an element of the SIMPLIFIED type, it is sufficient to indicate the size of the side of the base polygon (expressed in pixels), the height of the polyhedron (expressed in pixels) and the number of side faces of the object (or in other words, the number of sides of the base regular polygon).

There follows a series of tags like PAGEID_AND_ADDRESS in which for every polygon which composes the surface of the object it is possible to associate the address of a URL to be visualised on the polygon itself.

The structure of the description is absolutely intuitive and consists of the polygon identifying element and of the text string of the URL address to be visualised: the convention adopted for the identifiers of the polygons is processed in such a way that the identifiers 0 and 1 correspond to the upper and lower polygon, respectively, of the cylinder. All of the subsequent identifiers are assigned in sequence to the polygons of the side surface of the object.

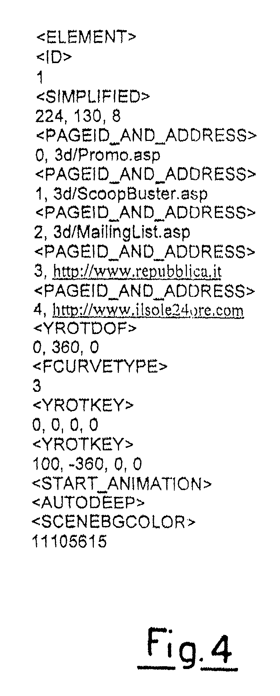

As can be seen in figure 4, any valid URL address for a standard web browser can be considered a valid address for visualized on polygons. The example in figure 4 shows html page addresses and "asp server script " without distinction between the two.

The XTRANDOF, YTRANDOF and ZTRANDOF "tags" specify the degrees of freedom possible for user interaction; in the case of the translation in question, the author decides whether he will provide the user with the capacity to translate the object within the area contained in the page. For example, when the XTRANDOF "tag" is omitted, the user has no interaction with the three-dimensional object in the X-axis direction translation.

Alternatively, the author can decide whether to provide freedom of movement without restriction, by assigning the value 0 to the following whole number, or to limit translation to moving in the left hand direction only, (value 1), or in the right hand direction only (value 2), or in both directions (value 3). If any limits are imposed, this must be explicated by one or two numeric values that define the extension of the allowed movement (the two subsequent "float" values).

The same principles described in detail for X translation are applied to all other degrees of freedom of translation, rotation as well as scaling-up.

Below is a section concerning the animation of three-dimensional objects.

It is possible to assign a function that describes the time dynamics to every animation parameter of the three-dimensional object. The method for defining this function consists in placing the principal FCURVETYPE "tag" before the function syntax (also refer to the rule in Figure 4) that defines the type of interpolation that the animation function uses between one "key frame" and the other. The specified "key frames" must therefore be interpolated by a continuous function so that a property value can be returned for every time instant. The interpolation between the "key frames" can be linear, "spline" or "bezier" type. The "key frames" form a sampling of the property animation in time. Therefore the author specifies for a few determined instants of time (called "keys") the value that the property must assume during that particular instant. As stated previously, all the other values are obtained by interpolation from these values.

The description of the "key frames" is composed of the definition of the values interleaved by the DOFKEY "tag", where DOF specifies the property to be animated (for example XTRANKEY). The values which characterised a "key frame" are that instant of time (expressed with a whole number that corresponds with the position of the frame inside the animated sequence) and the value of the property at that instant (for example - the position in X). In the case of "bezier" type interpolation, two further numerical values specify the slope of the function to the right and to the left of the "key frame" in question.

The next section shown in figure 2b is used to establish the object's preferential position states. Therefore, when the user interacts with the object using the mouse, this is positioned automatically in a preferential state as soon as the user releases the mouse button. The preferential state towards which the object will move is obviously that closest to the position of the object at the moment the mouse button is released. Generally these preferential states are defined by the author to guarantee that the object will be stabilized in a position and direction suitable for always ensuring perfect viewing and readability of the pages displayed upon it.

The description of the preferential states is preceded by the PREFSTATE "key tag". After this a PREF "tag" may appear for any type of movement (PREFTRAN, PREFROT, PREFSCALE). The preferential state is composed of three numerical values in sequence that fix the values for the specific property (values X, Y, and Z).

The next "tag": SCENEBGCLOR, defines the background colour.

As described previously, the three-dimensional object moves inside the rectangular area of the active component that contains it.

Generally this area is transparent, and therefore it is not visible. For special necessities, a colour can be specified to act as background for the three-dimensional object and in this case the area of the active component is overlaid on top of the underlying html page.

This property takes on a particular meaning when three-dimensional objects are published in "Window" mode.

In "Window" mode the three-dimensional object is viewed and moves within a specific area of the web page defined by the user. This area is an integrated part of the page and is adapted to contain and limit the object motion, and it possesses its own back-ground colour.

On the other hand, in "Windowless" mode, the object is free to move over the underlying page and appears like a three-dimensional component overlaid or applied on top of the page. The "Window" and "Window-less" viewing modes are specified in the author system and translated into HTML instructions as shown in Figure 6. This specification is taken into account during «Player 3D» 30 execution.

On the other hand, the FACEBGCOLOR "tag" defines a constant colour for those faces of the object on which no web contents are to be viewed. In this case, the identifying element of the polygon to be coloured must be indicated as well as the numeric value of the colour; the criteria used to identify polygons is the same as that described previously.

The numerical values that follow the "tag" syntax DEFAULT_TRANSFO specify the initial values of SRT ("Scaling", "Rotation", "Translation").

At the moment when the file is transferred inside the web browser, the three-dimensional object described therein will appear in the position, direction and size defined in the coordinates.

The STARTANIMATION "tag" allows to force the execution of the animation of the object in question (if provided) as soon as it is transferred to memory.

The NOAUTODEEP "tag" is used to inhibit the automatic operation for moving the object towards the negative Z-coordinate axis.

Sliding the object depth wise is aimed at making its foreground face coincide with the reference system origin. The measures described prevent the expansion of the face dimensions (compared to the pixel values programmed by the author) by the perspective effect due to face in foreground getting closer to virtual observer's viewpoint.

Lastly, the TURNING "tag" is used to lay the cylinder defined above, in horizontal position to obtain a kind of roller effect. In this case the base and the height of each polygon are inverted so that the hmtl page viewing is subject to the similar rotation.

Figure 4 is a self-explanatory example of how to describe a simple three-dimensional object with the web page viewed on its surfaces. This conforms strictly with the format rules described in the previous section.

Figures 7a, 7b, 8a and 8b show two different flowcharts that control the two different approaches (static and dynamic) for generating three-dimensional components.

The hardware and software systems and processing involved in these two cases are basically different, and involve increasingly complex activities by the author; in reality, the two approaches involve different activities only where the author is concerned, that is - during the generation of the three-dimensional components, while, from the user's point of view, «Player 3D» operates in the same manner and adopts two different procedures only during the data acquisition step, and in a transparent manner for the user, because of the different nature of the in-put data.

In the static approach described in figures 7a and 7b, the fundamental element is the author system 31. This is a software application that permits the web designer to build three-dimensional objects in a visual manner, and to arrange them on the html page; In addition, standard instruments inherited from applications traditionally directed at three-dimensional work are used to provide accurate animation definition of the object. The author software is illustrated in greater detail in figure 11 below. Once the object has been created and its visual and dynamic properties have been defined, the author system produces an exit file containing all the necessary information for object reconstruction; this file is generated in binary format.

As well as the binary file, the author system also produces the html instructions shown in figure 6 that invoke «Player 3D», defines the size of the active component to be created inside the web page, and specifies the name of the file containing the description of the object to be viewed (the previous file). The author is responsible for entering these html instructions inside the html code of the page intended to host the three-dimensional component.

The object's descriptive file, and the html page that make up the web site are published on the destination web server; this operation is illustrated on block 32. The standard size of a binary file is approximately 1 Kb, while the downloading time using a standard 28.8 kbps modem is less than a second.

As far as the user is concerned, he has access to the web page containing the three-dimensional component using the procedure shown on 33 in figure 7b.

If the "Player 3D" 30 is not installed in the selected web browser at the moment of execution of the instructions in figure 6, the browser will link up automatically to a specific web server, will download the «Player 3D» 30 file, decompact it, and install it.

These last two operations are shown in figure 7b in choice block 34 and process block 35.

Once the "Player 3D" 30 is installed, or if it is already resident in the browser, it will be executed; this will interpret the file that describes the three-dimensional component, and will display it on the screen. «Player 3D» 30 execution is represented by process block 36.

Figures 8a and 8b illustrate the dynamic approach flowchart. As far as the web server is concerned, the first operation the author must carry out is to request the licence for his personal domain.

Contrary to the case described above, generation of a file describing the three-dimensional component does not belong to the author system, and since this is a common text file, it can be compiled using a common text editor, provided that the format illustrated in figures 2a, 2b, 3 and 4 are respected correctly. «Player 3D» 30 is also able to interpret this format, but in this case, it guarantees the licence. As in the case of binary files, the standard size of a text file is approximately 1 Kb, and the downloading time using a standard 28.8 kbps modem is less than a second.

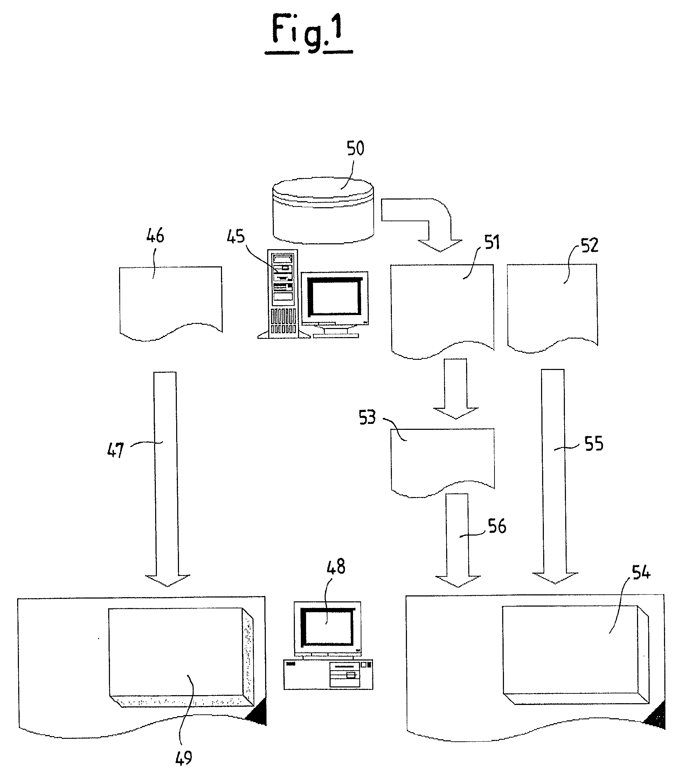

In order to illustrate the licence aspect more clearly, figure 1 shows the detailed authentication mechanism that involves a precise procedure by both server and user.

For the static approach, the flow runs in linear mode from the http server 45 to the user computer 48, passing through the downloading step 47 of binary file 46 up to its final viewing on the user screen, through active component 49.

For dynamic approach, the flow is more articulated and involves certain additional processes.

Http server 45 contains one or more script files 51 that can be interpreted by the server 45 itself, and file 52 that contains the licence key associated to the specific Internet domain. When computer user 48 accesses to http server 45, the script files 51 are not downloaded directly, but are executed by the server itself; what is downloaded is the result (53) of this execution process. Normally script files 51 are asp, jsp, type files etc., that use the "database" server 50 to extract the relative information (for example) for the user who has executed the access operation. The result of the script file execution is a text file that describes the three-dimensional elements in correct format for viewing through the active component 54. The text file 53 generated in this manner finally reaches user computer 48 through the downloading step 55. In user computer 48, the active component 54 will recognise the file format in input.

In the case in question, before viewing the contents, the active component will transfer the licence file 52, and will control that the key contained in it corresponds with the name of the Internet domain, according to a predetermined encrypting method. Finally, once the licence has been authenticated, process 54 views the three-dimensional component. The standard size of a licence file is approximately 100 bytes and the downloading time using a standard 28.8 kbps modem is less than 0.5 seconds.

Returning to figures 8a and 8b: once the author has obtained the valid licence for his personal domain, he is free to create the dynamic contents using standard http server script language; the operation shown in block 38 demonstrates that the server can generate three-dimensional components dynamically (for example) according to the registered user or according to events triggered by the user during navigation.

During step 39, the script files and licence files are stored and published in the web server.

As far as the user is concerned, all operations are executed in a transparent manner, but the viewing procedure passes through a sequence of more complex processes than those used for the static operation described previously; in reality, in this case as well as during step 33, the user can access a web page containing a three-dimensional component, but before the html pages are physically downloaded, the server executes the script server, and the result, composed of correctly formatted text files, is then transferred to the user browser. This is carried out in process block 40. Later on, the same control is carried out for the static operation, with or without the presence of «Player 3D» 30, followed by the eventual downloading and installation (processes 34 and 35).

Once it has been activated, «Player 3D» 30 identifies the type of file format in process 41. Since this is a dynamic type file, in the next block 42, the server licence file is read/identified and the key is compared with the name of the Internet domain of the site in question. If the licence is valid, the visualising process 36 will begin; alternatively (block 44) «Player 3D» 30 will terminate execution without viewing the file contents.

Figure 11 shows the detailed flowchart of a typical work session based on an author system (process 31 in Figure 7). The contributions to and from the exterior as well as the procedures that, on the contrary, are executed strictly within the system itself, are outlined.

As mentioned several times, the aim of author system 31 is to permit rapid prototype creation of three-dimensional contribution that the author intends to include in his web site. The procedure is executed in an integrated environment that is completely visual and interactive, to permit the definition of the geometrical and dynamic properties of the object, as well as the web contribution to be mapped on the surface of the object in question. The result of the operation is represented by binary files and html codes that can be easily integrated in the general site architecture.

Immediately after author system 31 is opened, the user can load into memory any project saved during some previous work session in order to modify or to create new properties. In the case where he decides to create new properties, a guided path (called "wizard") is proposed to provide user-friendly methods for defining the main features of the new object.

Once the project has been loaded into the system, the first set of properties needing definition is those concerning the work area 57 for use during the current work session. For this aspect, a dialog window is provided to specify the work folder path on hard disk. This window will be used for downloading all the generated "output" files and for taking out all html files declared during the following mapping step 62. The same dialog window can be employed by the user to indicate whether the system must interface with the local "http server", and in this case, the name must be specified for eventual "script servers" assigned to the surface faces as an alternative to html files. The possibility of using this method to execute scripts dynamically during a work session is a deciding factor to permit testing and validity control of object functions during definition processing. The last property related to the work area is to specify the name to be assigned to the object, as well as to the file it describes.

The following property block 58 to be defined concerns the active component. As stated previously, the active component forms the "container space" in which the three-dimensional element moves. This "container" occupies a portion of the page viewed in the browser, and generally it is overlaid on top in a transparent manner. A dialog window is used to define the dimensions of the "container space" (in other words, it establishes the size of the area within which the object can be animated) as well as the viewing mode. Two different modes are supported: the "window based" and the "windowless" one. In the "window-based" mode, the frame within which the object is viewed is easily identified inside the html page, and a specific portion is dedicated to this aspect inside the page architecture. In the "windowless" mode, the frame remains invisible (since it is transparent) and the three-dimensional object seems to float over the text contributions of the underlying page. In the former case, the dialog window permits the definition of the background colour of the frame in question.

Module 59 is used to define the geometrical properties of the object. In the prototype in question, the supported solids are simple regular geometrical cylinders where the following aspects are still to be defined: number of faces (i.e. the number of sides on the regular basic polygon), the length of the basic polygon side, and the height of the polyhedron. In the same dialog window it is also possible to specify the type of development (horizontal or vertical) of the cylinder itself.

The graphics interfacing included in author system 31 for defining the dynamic properties of the object are more elaborate than the previous types. These are composed of a first block 61, where for each degree of motion (translation, rotation and scale-up) the numeric value of the coordinate can be entered. Alternatively, the position and direction of the object can be controlled in an interactive manner in the previewing window, where it is possible to hook up the object using the mouse pointer and to move it, rotate it, bring it closer or move it further away in the desired configuration. The dialog window containing the current values of the degrees of motion provides a section in which these values can be entered as starting values (default values) at the moment the object is downloaded from the network to the "browser web". Each numeric value that represents the coordinates of a kinematics property of the object is assigned a button for insertion of the "key frames". When the button is pressed, a "key frame" (i.e. a sample) is inserted into the function curve of the property in question at the moment when the pointer is positioned on the time line, and with the current value assumed by the property at the time the button is pressed. In other words the procedure for "key frame" insertion is an interactive operation that is executed according to the following steps: the object is positioned in the desired configuration, the "key frame" is inserted, the time indicator is moved in a new moment, the object is moved to a new position, a new "key" is inserted, and so on. The entire procedure is executed in block 61, where "self-start" properties are also assigned. This means that if the animation of some object has been already programmed/entered, the animation will begin to move as soon as it is transferred to the user browser.

The defining of the object animation can be refined even further using block 60. A dedicated dialog window will view the corresponding function curve for every kinematics property. This is represented by a Cartesian system with the time axis as X-coordinate and the property value as y-coordinate.

The "key frames" are shown visibly by markers drawn on the curve that represents the development of the property. These curves can be manoeuvred directly from their graph that permits the removal of the preexistent "key frames" in interactive mode, the insertion of new "key frames" or changes to the curve rages and the type of interpolation between following "key frames".

Once the kinematics properties of the object have been defined, the next block (62) is used to specify the URL addresses to be mapped on each face of the polyhedron. In this case as well, a dedicated dialog window is used for easy definition of the html page to be used, or even for access to the network for link-up to pages on other sites present in Internet.

In actual practice, it is the author's job to enter the html code of the page he wishes to map on the object face, and this is executed by using common "web content management" instruments resident outside the author system (block 63).

In the previewing window, the surfaces to be mapped can be selected in sequence by simply clicking the mouse, and then they are assigned to the desired address. As mentioned previously, each face can be associated with any valid address that can be interpreted by the browser. This means that this even includes addresses of active components (the server-scripts).

The same dialog window dedicated to mapping can be used to define a background colour as an alternative to the URL address. Another dialog window activates procedure 64, where the author has the possibility to define what type of motion freedom is to be conceded to the user during the final interaction step with the three-dimensional object viewed on his browser. For obvious project design reasons the author may decide to restrict certain movements in order to prevent the object from being overlaid on undesired areas of the underlying page, or he may decide that for correct viewing of the information to be transmitted, the object must be limited to simple rotation or translation.

The dialog window in question provides the possibility of defining whether each kinematics property can be modified by the user, and if so, the superior and inferior variability limits can be specified.

Additionally, the same window is used to enter the preferential rest states. These represent the states of position, direction, and vicinity that the object will tend to approach as soon as it is released by the user during interaction. As described above, by using the mouse, the user is able to manoeuvre the object as he wishes, and when the action is interrupted, instead of remaining in the current position, the object will automatically move to the preferential state closest to the current position. The choice of the preferential states is of course perfectly free, but normally it coincides with those that permit the best readability conditions for the information mapped on the object face.

The "preview" block 65 is a graphic window used by the author to control the function levels and quality of the work underway. In reality, this preview window is divided into two sections: the first is the actual work area used by the author, where the user manipulates the object in complete freedom and defines the animation interactively, while the second section is an actual preview of the final result as it will appear to the web user, and it permits the same level of active component interaction as that in the hands of the end user. Interaction with the object is therefore subject to the constraints imposed by the author.

In order to permit a realistic "preview" of the final result, the author system 31 generates a complete html page, that contains the invoking to active component 30, and the definition of the object describer file. It also creates an independent web browser, visualises it, and initials it with the address of the page in question.

In the lower part of the graphic interface, a set of command controls (66) are used for animation "playback" in order to be able to preview the result. As well as the standard "play", "rewind" and "fast forward" controls, there is also a time line and a scroll pointer above it. This is the instrument that is used to vary the time references for "key frame" insertion in following time "instants". This also represents a handy interactive instrument for visualising the animated sequence since the time indicator can be hooked up using the mouse button and dragged onto the time line along the time axis.

Two of the important properties in this section are those that define the duration and the fluidity of the sequence: the duration is a value expressed in seconds and represents the time in which the object executes the animation assigned to it, while the fluidity expresses the level of continuity in which the object moves. Practically, it is an indirect measurement of the number of times that the "bitmap", representing the object, must be redrawn and recomposed on the underlying page within that unit of time in order to obtain the motion effect; the rewriting event of the "bitmap" is equal to a "rendering" cycle in the active component 30.

Once the property definition step has been completed and the work executed in the "preview" window has been confirmed, the last step involves exporting the result from the author system 31. This is carried out in block 67 in figure 11.

The export effect is composed of the generation of a binary file 69 that contains in encrypted mode, all the information that the author has specified for the object in question, as well as a set of html instructions (68) (described in detail in figure 6) that the author will enter in the html page intended to host the three-dimensional object. Both aspects are then published in the web server intended to contain the web site under construction.

This description provides a clear explanation of the features of this system for the creation, visualisation, and management of three-dimensional objects on web pages as well as the relative execution methods, that are the object of this invention, and just as clear are the advantages thereof.

Last of all, it is obvious that a large number of other variants can be applied to this system and method without departing from the novelty principles that are the basis for this inventive concept. It is just as clear that with the practical application of this invention, all the functions, materials, forms and dimensions included in the illustrated details can be of any type as required, and that these can be replaced with others that are technically equivalent.

## Claims

1. Method for the creation, visualisation and management of three-dimensional objects on web pages, suitable for allowing access to three-dimensional objects present on a web browser (29) of a network of the World-Wide-Web type, **characterised in that** it comprises a first electronic processing step of said objects, which are treated so as to appear like real objects on standard web pages, said objects being suitable for interacting with a user, so as to visualise their information present on their outer surfaces, and a second superimposition step of html pages on said surfaces of the objects, so that each face of every object behaves like a standard web browser (29), supporting its functions.

2. System for the creation, visualisation and management of three-dimensional objects on web pages implementing a relative method according to claim 1, **characterised in that** it comprises at least two acting subjects and at least two different hardware configurations, in which a first system comprises a web server (22), where the web pages containing said three-dimensional objects are stored, a series of access keys (25, 26), a computer (22A) and an application programme for processors suitable for generating the web pages, and a second system comprising means for web browser (29) execution on one or more processors (24) of end users, at least one software application (30) functioning in the web browser (29) and at least one web server (23), to which the user accesses to download the contents of at least one web application (28).

3. System according to claim 2, **characterised in that** said software application (30) consists of the 3D Player active component which, if already present inside said processor (24) of the end user, allows the generation of a reference file containing the description of said three-dimensional objects to be visualised.

4. System according to claim 2, **characterised in that** said software application (30), consisting of the 3D Player active component, can be downloaded automatically from the web server (23) and can be installed in the processor (24) of the end user, so that a plurality of web browsers (29) access said web application (28) simultaneously.

5. System according to claim 2, **characterised in that** said web browser (29) comprises at least one three-dimensional interface, which can be managed in static manner, in other words generated by the authors of a website, or dynamically composed of a server system, from at least one database (27), for the generation of html pages.

6. System according to claim 2, **characterised in that** said three-dimensional objects are created and animated by the authors of the site statically or in a dynamic manner, executing a server programme each time one access a web page.

7. System according to claim 2, **characterised in that** said web browser (29) executes, as a Windows application, an application of the ActiveX type, the visualisation window of which superimposes over an underlying web page, said visualisation window comprising an area, in which said three-dimensional object to be represented is not present, which is made completely transparent through a rendering step, so as not to obscure the underlying page.

8. System according to claim 4, **characterised in that** said 3D Player active component allows the user to manipulate the position and orientation of said three-dimensional object in space and guarantees a series of operations which the user completes on interfaces based upon Hyper-text.

9. Method for creation, visualisation and management according to claim 1, **characterised in that** it foresees the following steps:
- recognition (1) of data formats in input;
- validation (8), by means of an authentication file, and verification with access keys, in the case in which a text format is recognised;
- reading (3) of the description of elements by at least one document on the net (4, 5) and creation of at least one three-dimensional object in memory;
- realisation (9) pf a new web browser 29 for each face of said three-dimensional object associated with the address of a html file or with a whatever server application which restores a html file;
- loading of the html pages;
- subsequent implementation of a rendering step (6) and rests listening step for a subsequent input (13) made by the user;
- implementation of a texturing step (11), in which the image of said html page visualised in the web browser (29) is memorised;
- derivation of a physical image of the web page by said web browser (29) in consecutive moments in time and sending of said image to a rendering block (6) together with the geometric and physical description of said three-dimensional object at the same moment, said rendering block (6) being capable of generating and visualising a perspective image of said object on a monitor (12).

10. Method according to claim 9, **characterised in that** said description contains information relative to the geometry and the animation of said three-dimensional object of the component and the URL addresses of every html element present on each surface of said three-dimensional object.

11. Method according to claim 9, **characterised in that** said elements comprise the number of sides, the length of each side, the dimensions of the surfaces, the animations, the preferential manners and the degrees of freedom of each three-dimensional object.

12. Method according to claim 9, **characterised in that** said rendering step (6) uses the geometric data of said three-dimensional object and the kinematic data relative to the position of said object in a certain reference system of said active component, said data being lifted from images extracted from said web browsers (29) to be visualised on the surfaces of the object.

13. Method according to claim 12, **characterised in that** said rendering step (6) comprises a first step (17), which carries out an algorithm with linear scanning, during which the geometric and positional information of said three-dimensional object is processed and said information is related from the point of view of the observer to obtain a perspective effect of said object.

14. Method according to claim 13, **characterised in that** said rendering step (6) comprises a second step (18) in which an image or bitmap (19) is generated of the perspective representation of the object, determined by the position in space from the point of view of the observer.

15. Method according to claim 14, **characterised in that** said rendering step generates a further output (20), which guarantees the hypertext function of the pages visualised on each three-dimensional objects.

16. Method according to claim 11, **characterised in that** said animation step of the three-dimensional objects is executed in such a way that with every animation parameter of each three-dimensional object can be associated a function which describes their dynamic behaviour in time.

17. Method according to claim 1, **characterised in that** said three-dimensional objects have states of position which can be set by the user, through interaction with the mouse.

18. Method according to claim 1, **characterised in that** said three-dimensional components are generated in a static or dynamic manner.

19. Method according to claim 18, **characterised in that** said static manner foresees the operation of a software application (31), which allows a web page author to construct the three-dimensional objects in a visual manner and to compose them on a html page, said application producing in output a file in binary format containing the necessary information to reconstruct said three-dimensional object.

20. Method according to claim 18, **characterised in that** said dynamic manner is executed (38) by said server, which generates three-dimensional components according, for example, to registered user or events started up by the user himself during navigation.

21. Method according to claim 18, **characterised in that** said dynamic manner is executed through a step (33) in which the user accesses a web page containing a three-dimensional object and, before said html pages are physically downloaded, the server executes the script servers and the result, consisting of formatted text files, is transmitted (40) to a user browser.

22. Method according to claim 21, **characterised in that** said 3D Player active component reads (41) the file format type, reads (42) a licensing file of said server and compares an access key with the internet domain name of the site and, in the case in which said licence is valid, initiates a visualisation procedure (36), whereas, in the case in which said licence is not valid (44), terminates execution without visualising the content of said licence file.

23. Method according to claims 3 and 5, **characterised in that** it foresees the realisation of a proprietary file format for the description of three-dimensional components, making said active component capable of interpreting files, in binary or text format, adhering to a predetermined formatting, so as to make the web authors capable of developing script applications using said three-dimensional interface.

24. Method according to claim 1, **characterised in that** it foresees the realisation of a software system (31) which allows the generation of three-dimensional objects and the definition of their properties in a visual and interactive environment, which does not require the writing of HTML code by the author but automatically generates the code instructions necessary for the publication of said objects on a website.
